# EUROPEAN PATENT APPLICATION

(11) **EP 4 455 396 A1**
(43) Date of publication of application: **30.10.2024**
(21) Application number: 23747280.8
(22) Date of filing: 20.01.2023
(51) Int. Cl.: D06F 43/08

(54) **COMPRESSION SYSTEM AND CLOTHING TREATMENT DEVICE INCLUDING SAME**

(30) Priority: 25.01.2022 KR 20220010904
(71) Applicant: LG Electronics Inc., Yeongdeungpo-gu Seoul 07336 (KR)
(72) Inventor: CHOI, Yi Cheol, Seoul 08592 (KR); PARK, Il Young, Seoul 08592 (KR); JOO, Sang Hyun, Seoul 08592 (KR); LEE, Jang Seok, Seoul 08592 (KR)
(74) Representative: Vossius & Partner Patentanwälte Rechtsanwälte mbB
(86) International application number: PCT/KR2023/001055
(87) International publication number: WO 2023/146239

(57) **Abstract**

Provided is a compression system including a compressor configured to compress and discharge a refrigerant and comprising a refrigerant inflow port through which the refrigerant flows in and an oil recovery port for recovering oil, a plurality of oil separator configured to separate the oil which is included in the refrigerant discharged from the compressor and comprising a first oil separator into which the refrigerant discharged from the compressor flows and a second oil separator connected to the first oil separator in series along a travelling path of the refrigerant, a first recovery pipe configured to recover the oil from the first oil separator to the oil recovery port, and a second recovery pipe configured to recover the oil from the second oil separator to the refrigerant inflow port.

## Description

### Technical Field

The present disclosure relates a compression system and a clothing treatment device including a same. More specifically, the present disclosure relates to a compression system for separating oil from carbon dioxide compressed in a compressor and discharged therefrom in a clothing treatment device that performs carbon dioxide dry-cleaning and the clothing treatment device including a same.

### Background Art

A generally used dry-cleaning solvent is environmentally harmful and a factor dangerous for health and safety. Perchloroethylene as a representative dry-cleaning solvent is treated as a carcinogen. A generally used gasoline-based solvent is dangerous due to flammability and generate smog.

In order to solve such a problem of the gasoline-based solvent, a dry-cleaning system using carbon dioxide has been developed. Carbon dioxide is nontoxic, nonflammable, does not generate the smog, and is unlimited in amount. In addition, liquid carbon dioxide may be a proper dry-cleaning agent because liquid carbon dioxide does not damage fabric and may be dissolved in dye.

In the dry-cleaning system using the carbon dioxide, a washing operation may be performed with the carbon dioxide supplied to a washing tub. The carbon dioxide which is used in the washing operation and contaminated is discharged to a distillation tub connected to the washing tub. While vaporized by a heat exchanger provided inside the distillation tub, the contaminated carbon dioxide is separated from a contaminant. At this point, a compressor provided to the dry-cleaning system is supplied with the carbon dioxide from the distillation tub, compresses the carbon dioxide into high-temperature carbon dioxide, and then supplies the high-temperature carbon dioxide to the heat exchanger inside the distillation tub.

Generally, an oil compressor is used in such a dry-cleaning system. A compressor additionally supplied with oil for lubricating an operation of the compressor is referred to as the oil compressor. Such oil lubricates the operation of the compressor in the compressor, and then, a portion of the oil is mixed with a refrigerant and discharged. Thus, the oil compressor may include an oil separator for separating the oil from the refrigerant.

Meanwhile, since the carbon dioxide directly touches laundry in a clothing treatment device that performs carbon dioxide dry-cleaning, washing performance may be decreased when a large amount of the oil is included in the carbon dioxide. Thus, in order to solve such a problem, a structure in which a plurality of oil separators is connected in series may be taken into consideration.

For such a structure of the plurality of oil separators, a connection pipe in which the oil is to flow between the plurality of oil separators may be taken into consideration. In such a compression system, the oil may concentrate in one oil separator via the connection pipe due to pressure differences between the plurality of oil separators. Accordingly, the oil which is recovered to the compressor may be in sufficient, and the refrigerant may be together recovered to the compressor, which cause a decrease in efficiency of the compressor.

In addition, since the oil which is separated in the plurality of oil separators is not efficiently recovered to the compressor, a consumed amount of the oil may be increased.

### Disclosure of Invention

### Technical Goals

The present disclosure is to provide a compression system for improving efficiency of a compressor by preventing a shortage of oil recovered to the compressor and recovery of a refrigerant due thereto and a clothing treatment device including a same.

In addition, the present disclosure is to provide a compression system for reducing an oil consumption amount by efficiently recovering oil separated in a plurality of oil separators to a compressor and a clothing treatment device including a same.

### Technical solutions

According to an aspect, there is provided a compression system including a compressor configured to compress and discharge a refrigerant and including a refrigerant inflow port through which the refrigerant flows in and an oil recovery port for recovering oil, a plurality of oil separator configured to separate the oil which is included in the refrigerant discharged from the compressor and including a first oil separator into which the refrigerant discharged from the compressor flows and a second oil separator connected to the first oil separator in series along a travelling path of the refrigerant, a first recovery pipe configured to recover the oil from the first oil separator to the oil recovery port, and a second recovery pipe configured to recover the oil from the second oil separator to the refrigerant inflow port.

Through this, efficiency of the compressor may be increased by preventing a shortage of the oil recovered to the compressor and recovery of the refrigerant due thereto.

Also, an oil consumption amount may be reduced by efficiently recovering the oil separated in the plurality of oil separators to the compressor.

The second recovery pipe may be directly connected to the refrigerant inflow port or connected to a refrigerant pipe connected to the refrigerant inflow port.

The compression system may further include a first flow amount control valve provided on the first recovery pipe and configured to control a recovery amount of the oil, and a second flow amount control valve provided on the second recovery pipe and configured to control the recovery amount of the oil.

The compression system may further include an oil check valve provided on the first recovery pipe and configured to prevent a backflow of the oil.

The plurality of oil separators may further include a third oil separator connected to the second oil separator in series along the travelling path of the refrigerant, and the compression system may further include a first connection pipe in which the oil is to flow between the second oil separator and the third oil separator.

The compression system may further include a first shutoff valve provided on the first connection pipe and configured to shut off a flow of the oil.

The second recovery pipe may be connected to the first connection pipe, and the first shutoff valve may be disposed between the second recovery pipe and the third oil separator.

The first shutoff valve may be opened when an oil surface of the oil in the third oil separator is higher than an oil surface of the oil in the second oil separator.

The compression system may further include an oil reservoir provided by branching from one point on a path of the refrigerant discharged from the compressor toward the first oil separator and configured to store the oil with which the compressor is to be replenished, and a second connection pipe in which the oil is to flow between the first oil separator and the oil reservoir. In addition, the compression system may further include a second shutoff valve provided on the second connection pipe and configured to shut off a flow of the oil.

The first recovery pipe may be connected to the second connection pipe, and the second shutoff valve may be disposed between the second connection pipe and the oil reservoir.

The compression system may further include a refrigerant check valve configured to prevent a backflow of the refrigerant and provided to a refrigerant pipe configured to supply the refrigerant.

The compression system may further include an oil reservoir provided by branching from one point on a path of the refrigerant discharged from the compressor toward the first oil separator and configured to store the oil with which the compressor is to be replenished, and a replenishment pipe configured to replenish an oil chamber with the oil from the oil reservoir.

The compressor may further include an oil replenishment port configured to replenish the oil chamber with the oil, and the replenishment pipe may be connected to the oil replenishment port.

The compression system may further include a third shutoff valve provided on the replenishment pipe and configured to shut off a flow of the oil.

According to another aspect, there is also provided a clothing treatment device including a washing unit that is supplied with a refrigerant and performs washing of laundry, a distillation unit comprising a shell forming, inside the shell, a distillation space for receiving the refrigerant which is discharged from the washing unit and comprising a heater positioned inside the shell to heat the refrigerant received in the distillation space, a compression system for compressing the refrigerant which is distilled in the distillation space and supplying the refrigerant to the heater, a freezing unit that freezes the refrigerant which is discharged from the heater, and a storage unit that stores the refrigerant which is liquefied by the freezing unit, and the compression system may include a compressor configured to compress and discharge a refrigerant and comprising a refrigerant inflow port through which the refrigerant flows in and an oil recovery port for recovering oil, a plurality of oil separator configured to separate the oil which is included in the refrigerant discharged from the compressor and comprising a first oil separator into which the refrigerant discharged from the compressor flows and a second oil separator connected to the first oil separator in series along a travelling path of the refrigerant, a first recovery pipe configured to recover the oil from the first oil separator to the oil recovery port, and a second recovery pipe configured to recover the oil from the second oil separator to the refrigerant inflow port.

### Effects

Through the present disclosure, it is possible to improving efficiency of a compressor by preventing a shortage of oil recovered to the compressor and recovery of a refrigerant due thereto.

In addition, it is possible to reduce an oil consumption amount by efficiently recovering the oil which is separated in a plurality of oil separators to the compressor.

### Brief Description of Drawings

FIG. 1 is a diagram illustrating a dry-cleaning system of a clothing treatment device according to a first example embodiment of the present disclosure.
FIG. 2 is a diagram illustrating a compression system according to a first example embodiment of the present disclosure.
FIG. 3 is a conceptual diagram illustrating an oil recovery amount of a compression system according to a first example embodiment of the present disclosure.
FIG. 4 is a diagram illustrating a compression system according to a second example embodiment of the present disclosure.
FIG. 5 is a diagram illustrating an operation of a portion of elements of a compression system according to a second example embodiment of the present disclosure.
FIG. 6 is a diagram illustrating a compression system according to a third example embodiment of the present disclosure.
FIG. 7 is a diagram illustrating an operation of a portion of elements of a compression system according to a third example embodiment of the present disclosure.
FIG. 8 is a diagram illustrating a compression system according to a fourth example embodiment of the present disclosure.
FIG. 9 is a diagram illustrating a compression system according to a fifth example embodiment of the present disclosure.

### Best Mode for Carrying Out the Invention

Terms used in the example embodiments are selected, as much as possible, from general terms that are widely used at present while taking into consideration the functions obtained in accordance with the present disclosure, but these terms may be replaced by other terms based on intentions of those skilled in the art, precedents, emergence of new technologies, or the like. Also, in a particular case, terms that are arbitrarily selected by the applicant of the present disclosure may be used. In this case, the meanings of these terms may be described in corresponding description parts of the disclosure. Accordingly, it should be noted that the terms used herein should be construed based on practical meanings thereof and the whole content of this specification, rather than being simply construed based on names of the terms.

Terms "module" and "part" used for elements in the following description are granted or used together in consideration only of easy drawing of the specification and do not have meanings or roles that may be independently distinguished. Also, in the descriptions of example embodiments in the present disclosure, when a description for prior art is determined to obscure the gist of the present disclosure, the detailed description will be omitted. In addition, the accompanying drawings is to easily understand example embodiments included in the present disclosure, does not limit the technical spirit of the present disclosure, and may be understood as including all changes, equivalents, or substitutes included in the spirit and the technical spirit of the present disclosure.

Terms including an ordinal number such as "first" or "second" used in the present specification may be used to describe various elements. However, the elements may not be limited by the terms. The terms are used to distinguish one element from another element.

When an element is described as being "connected" or "joined" to another element, it may be understood that the element is directly connected or joined to the other element or that still another element is present in between. In contrast, when an element is described as being "directly connected" or "directly joined" to another element, it may be understood that still another element is absent in between.

Terms in a singular form used in the present specification includes all of the terms in the singular form and a plural form unless an apparently and contextually conflicting description is present.

Terms such as "include" or "have" throughout the specification is to indicate that a feature, a number, a step, an operation, an element, a component, or a combination thereof described in the specification is present and may be understood as not excluding beforehand possibilities of adding or existence of one or more other features, numbers, steps, operations, elements, components, or combinations thereof.

Throughout the specification, expression "at least one of a, b, and c" may include 'a only', 'b only', 'c only', 'a and b', 'a and c', 'b and c', or 'all of a, b, and c'.

In the following description, example embodiments of the present disclosure will be described in detail with reference to the drawings so that those skilled in the art may easily carry out the present disclosure. The present disclosure may be embodied in many different forms and is not limited to example embodiments described herein.

Hereinafter, example embodiments of the present disclosure will be described with reference to the drawings. Since the hundreds digit in a reference numeral of an identical element may be written variously depending on example embodiments, unless individually described, the element may be treated to be identical to an element, of another example embodiment, of which digits less than the hundreds digit are equal to those of the element (for example, an element corresponding to reference numeral 220 of a second example embodiment may have a characteristic identical to that of an element corresponding to reference numeral 120 of a first example embodiment).

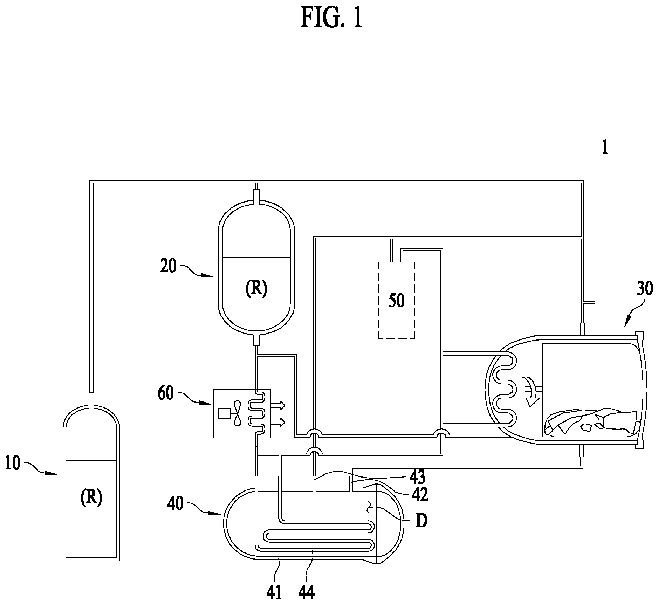

FIG. 1 is a diagram illustrating a dry-cleaning system of a clothing treatment device according to an example embodiment of the present disclosure.

Hereinafter, a clothing treatment device 1 of the present disclosure will be described with an example of using carbon dioxide as a solvent to perform dry-cleaning, but is not limited thereto. A dry-cleaning system of a clothing device according to the present disclosure may use another solvent having an identical or similar cycle.

Hereinafter, the clothing treatment device 1 according to the present disclosure may include a supply unit 10, a washing unit 30, a distillation unit 40, a compression system 50, a freezing unit 60, and a storage unit 20. However, the clothing treatment device 1 may be carried out without a portion of the above-described elements and not exclude an additional element.

Referring to FIG. 1, the clothing treatment device 1 may include the supply unit 10. The supply unit 10 may be connected to the washing unit 30. The supply unit 10 may supply a refrigerant R to the washing unit 30. Hereinafter, the refrigerant R may be understood as being referred to as the carbon dioxide.

The clothing treatment device 1 may include the washing unit 30. The washing unit 30 may be supplied with the refrigerant R. The refrigerant R may be supplied from the supply unit 10 and/or the storage unit 20 which will be described below. The washing unit 30 may perform washing of laundry. In addition, the washing unit 30 may perform a rinsing process after a washing process. The refrigerant R which completes the washing and/or rinsing and is contaminated may be discharged to the distillation unit 40.

The clothing treatment device 1 may include the distillation unit 40. The distillation unit 40 may be positioned next to the washing unit 30 on a path of the refrigerant R. The distillation unit 40 may separate an impurity from the contaminated refrigerant R.

Specifically, the distillation unit 40 may include a shell 41. A distillation space D may be formed inside the shell 41. The distillation space D may be formed as an airtight space by the shell 41. The distillation space D may receive the discharged contaminated refrigerant R after the washing unit 30 performs the washing inside the distillation space D.

The shell 41 may include an inflow port 42 and a discharge port 43. The contaminated refrigerant R discharged from the washing unit 30 may flow into the distillation space D via the inflow port 42. The refrigerant R which is distilled in the distillation space D may flow into, via the discharge port 43, the compression system 50 which will be described below.

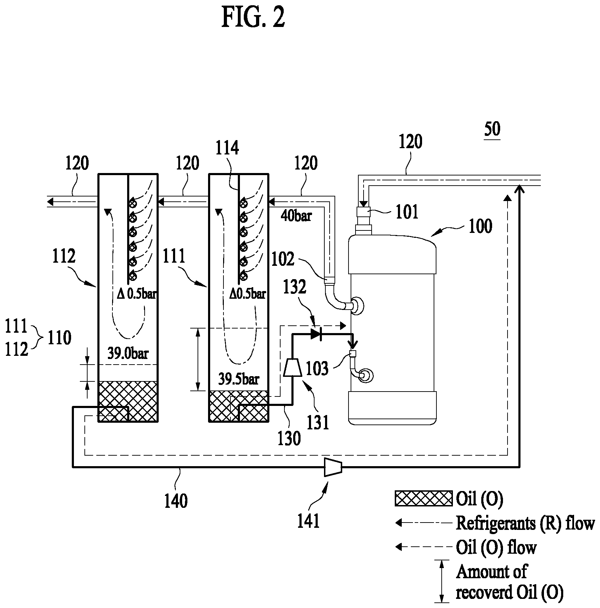

The clothing treatment device 1 may include the compression system 50. One side of the compression system 50 may be connected to the distillation space D of the distillation unit 40, and another side of the compression system 50 may be connected to a heater 44 of the distillation unit 40. The compression system 50 may compress the refrigerant R distilled in the distillation space D. The compression system 50 may supply the refrigerant R which is compressed with a high temperature and a high pressure to the heater 44 of the distillation unit 40. The compression system 50 will be described below in detail with reference to FIGS. 2 through 7.

The distillation unit 40 may include the heater 44. The heater 44 may be positioned inside the shell 41. One side of the heater 44 may be connected to the compression system 50, and another side of the heater 44 may be connected to the freezing unit 60. The heater 44 may heat, through the refrigerant R which flows in from the compression system 50 and has the high temperature and the high pressure, the refrigerant R which is contaminated and received in the distillation space D.

The clothing treatment device 1 may include the freezing unit 60. One side of the freezing unit 60 may be connected to the heater 44, and another side of the freezing unit 60 may be connected to the storage unit 20. The refrigerant R which passes through the heater 44 may flow into the freezing unit 60. The freezing unit 60 may freeze the refrigerant R which is discharged from the heater 44 and then supply the refrigerant R to the storage unit 20.

The clothing treatment device 1 may include the storage unit 20. One side of the storage unit 20 may be connected to the freezing unit 60. The storage unit 20 may store the refrigerant R which is liquefied by the freezing unit 60. When the washing process and/or the rinsing process is started, the storage unit 20 may supply the refrigerant R stored therein to the washing unit 30.

Hereinafter, circulation of carbon dioxide R according to the washing process and/or the rinsing process will be described.

The laundry may be positioned in the washing unit 30 for the washing and/or the rinsing. When a door of the washing unit 30 is closed, a washing tub of the washing unit 30 is decompressed to be a vacuum. Before the washing process and/or the rinsing process is started, the carbon dioxide R in a gaseous state may be supplied from the supply unit 10 and/or the storage unit 20, and the washing unit 30 may be compressed by the carbon dioxide R.

During the washing process, the carbon dioxide R may dissolve a contaminant of the laundry in the washing unit 30. After the washing process is ended, the carbon dioxide R in a liquid state in the washing unit 30, which is contaminated, may be discharged to the distillation unit 40 via an outlet.

The rinsing process may be started immediately after the washing process is ended. At this point, the carbon dioxide R which is clean may be supplied again to the washing unit 30. Similarly to the washing process, the carbon dioxide R in the liquid state in the washing unit 30 may be discharged to the distillation unit 40 via the outlet after the rinsing process is ended.

The carbon dioxide R discharged from the washing unit 30 may be collected in the distillation space D formed inside the shell 41 of the distillation unit 40.

In parallel with the rinsing process, distillation of the carbon dioxide R in the liquid state, which is contaminated, may be started in the distillation unit 40. The distillation may be performed while the carbon dioxide R which is contaminated and received to the distillation space D is heated by the heater 44 positioned inside the distillation unit 40.

Specifically, the carbon dioxide R distilled in the distillation space D and discharged therefrom may flow into the compression system 50 connected to the discharge port 43 of the shell 41. The compression system 50 may compress the carbon dioxide R flowing in and generate high-temperature and high-pressure carbon dioxide R. The high-temperature and high-pressure carbon dioxide R may be supplied to a flow path forming the heater 44 positioned inside the distillation unit 40 and connected to the compression system 50. The high-temperature carbon dioxide R which flows along the flow path may heat the carbon dioxide R contaminated and received to the distillation space D. At this point, the carbon dioxide R flowing into the heater 44 may be understood as the carbon dioxide R which has been already distilled and released from the distillation space D and is in a clean state.

The impurity may be separated while the carbon dioxide R is distilled in the distillation space D. That is, in the carbon dioxide R which is contaminated, the carbon dioxide R may be distilled and flow into the compression system 50, and the impurity may be precipitated in a lower side of the distillation space D. The impurity precipitated as such may be collected in a waste drum.

The carbon dioxide R which is clean and passes through the heater 44 may be frozen by the freezing unit 60. The frozen carbon dioxide R may be liquefied and stored in the storage unit 20.

As such, the circulation of the carbon dioxide R is completed during one washing process and/or one rinsing process, the carbon dioxide R stored in the storage unit 20 may be supplied to the washing unit 30 for a subsequent washing process and/or a subsequent rinsing process.

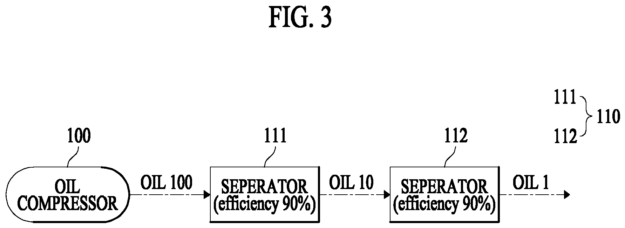

FIG. 2 is a diagram illustrating a compression system according to a first example embodiment of the present disclosure. FIG. 3 is a conceptual diagram illustrating an oil recovery amount of a compression system according to the first example embodiment of the present disclosure.

Hereinafter, the compression system 50 according to the present disclosure will be described with an example of being used in a dry-cleaning system using carbon dioxide, but is not limited thereto. The compression system 50 according to the present disclosure may be broadly used in a field in which an oil compressor such as a freezer is used.

The compression system 50 according to an example embodiment of the present disclosure may include a compressor 100, a plurality of oil separator 110, a refrigerant pipe 120, a first recovery pipe 130, a first flow amount control valve 131, an oil check valve 132, a second recovery pipe 140, and a second flow amount control valve 141. However, the compression system 50 may be carried out without a portion of the above-described elements and not exclude an additional element.

Referring to FIG. 2, the compression system 50 may include the compressor 100. The compressor 100 may compress and discharge the refrigerant R. The compressor 100 may be an oil compressor additionally using oil O for lubricating an operation. For example, the compressor 100 may be a rotary compressor such as a screw compressor or a reciprocating compressor such as a linear compressor.

The compression system 50 may include a refrigerant inflow port 101. The refrigerant R may flow into an inside of the compressor 100 via the refrigerant inflow port 101. Specifically, the refrigerant pipe 120 may be connected to the refrigerant inflow port 101 of the compressor 100. The refrigerant R may flow into the inside of the compressor 100 along the refrigerant pipe 120 connected to the refrigerant inflow port 101 of the compressor 100.

The compression system 50 may include an oil chamber (not illustrated). The oil chamber (not illustrated) may be provided inside the compressor 100. The oil chamber (not illustrated) may receive the oil O. The oil chamber (not illustrated) may supply the oil O to components inside the compressor 100 for lubricating the operation of the compressor 100 when the compressor 100 operates.

The compression system 50 may include an oil recovery port 103. The oil O may be recovered to the oil chamber (not illustrated) via the oil recovery port 103. Specifically, the oil O which is collected in a first oil separator 111 may be recovered to the oil chamber (not illustrated) via the first recovery pipe 130 which connects the first oil separator 111 and the oil recovery port 103.

The compression system 50 may include an oil surface sensor (not illustrated). The oil surface sensor (not illustrated) may be provided to the oil chamber (not illustrated). The oil surface sensor (not illustrated) may sense an amount of the oil O received in the oil chamber (not illustrated).

The compression system 50 may include the plurality of oil separators 110. The plurality of oil separators 110 may separate the oil O which is included in the refrigerant R discharged from the compressor 100.

Hereinafter, in the compression system 50 according to the first example embodiment of the present disclosure, the plurality of oil separator 110 may be described with an example of being formed with two oil separators 111 and 112. However, three or more oil separators may be connected in series to form the plurality of oil separators 110.

Referring to FIG. 2, the plurality of oil separators 110 may include the first oil separator 111. The first oil separator 111 may be provided closest to the compressor 100 on a travelling path of the refrigerant R.

The refrigerant R discharged from the compressor 100 may flow into the first oil separator 111. Specifically, the refrigerant R discharged from the compressor 100 may flow into the first oil separator 111 via the refrigerant pipe 120 which connects the compressor 100 and the first oil separator 111.

The plurality of oil separators 110 may include a second oil separator 112. The second oil separator 112 may be connected to the first oil separator 111 in series along the travelling path of the refrigerant R. The refrigerant R which passes through the first oil separator 111 may flow into the second oil separator 112 via the refrigerant pipe 120 which connects the first oil separator 111 and the second oil separator 112.

All the plurality of oil separators 110 according to the present disclosure may have equal oil separation efficiency. For example, as illustrated in FIGS. 2 and 3, each of the plurality of oil separators 110 may have oil separation efficiency of ninety percent, which may be understood as that each time the refrigerant R which includes the oil O passes each of the oil separators 111 and 112, ninety percent of the oil O is separated from the refrigerant R.

In contrast, the plurality of oil separators 110 may have oil separation efficiency different from each other. For example, oil separation efficiency of the first oil separator 111 which is required to separate a largest amount of the oil O may have highest efficiency, and the farther from the compressor 100, the lower the oil separation efficiency may be.

Each of the plurality of oil separators 110 may include a filter 114. The filter 114 may be positioned in an upper area of each of the oil separators 111 and 112. The oil O may be separated while the refrigerant R which flows into each of the oil separators 111 and 112 passes the filter 114. The oil O separated by the filter 114 may descend to and be collected in a lower part of each of the oil separators 111 and 112.

The compression system 50 may include the refrigerant pipe 120. It may be understood that a pipe in which the refrigerant R flows into the compressor 100, a pipe connecting the compressor 100 and the first oil separator 111 and a pipe connecting the first oil separator 111 and the second oil separator 112 are all referred to as the refrigerant pipe 120. The refrigerant pipe 120 may connect a plurality of elements of the compression system 50 to form the travelling path of the refrigerant R.

The refrigerant pipe 120 may be connected to the upper area of each of the oil separators 111 and 112. Since the filter 114 is provided in the upper area of each of the oil separators 111 and 112, it may be desired that the refrigerant pipe 120 is also disposed in the upper area of each of the oil separators 111 and 112. Through this, the refrigerant R including the oil O easily passes the filter 114, and thus, the oil O may be further efficiently separated.

The plurality of oil separators 110 may be connected in series along the travelling path of the refrigerant R. Specifically, the refrigerant pipe 120 which is connected to a refrigerant discharge port 102 of the compressor 110 may be connected to an inflow port of the first oil separator 111. The refrigerant pipe 120 which is connected to a discharge port of the first oil separator 111 may be connected to an inflow port of the second oil separator 112. The refrigerant R may be discharged from the compression system 50 via the refrigerant pipe 120 which is connected to a discharge port of the second oil separator 112.

When the plurality of oil separators 110 is connected in series along the path of the refrigerant R as described above, the refrigerant R including the oil O may pass the plurality of oil separator 110 sequentially. Accordingly, the oil separation efficiency may be improved.

The compression system 50 may include the first recovery pipe 130. The first recovery pipe 130 may connect the first oil separator 111 and the oil recovery port 103 of the compressor 100. The first recovery 130 may recover the oil O from the first oil separator 111 to the oil recovery port 103.

The compression system 50 may include the first flow amount control valve 131. The first flow amount control valve 131 may be provided on the first recovery pipe 130. The first flow amount control valve 131 may control a recovery amount of the oil O.

The first flow amount control valve 131 may be electrically connected to the oil surface sensor (not illustrated). Specifically, the oil surface sensor (not illustrated) may sense the amount of the oil O received in the oil chamber (not illustrated), change the amount of the received oil O into an electronic signal, and then send the electronic signal to a processor. According to a predetermined reference, the processor may increase a recovery amount of the oil O that is through the first recovery pipe 130 when the amount of the oil O received in the oil chamber (not illustrated) is insufficient and decrease the recovery amount of the oil O through the first recovery pipe 130 when the amount of the oil O received in the oil chamber (not illustrated) exceeds a reference value.

The compression system 50 may include the oil check valve 132. The oil check valve 132 may be provided on the first recovery pipe 130. The oil check valve 132 may prevent a backflow of the oil O. Specifically, the oil check valve 132 may shut off a flow of the oil O from the compressor 100 to the first oil separator 111.

The compression system 50 may include the second recovery pipe 140. The second recovery pipe 140 may connect the second oil separator 112 and the refrigerant inflow port 101. The second recovery pipe 140 may recover the oil O from the second oil separator 112 to the refrigerant inflow port 101.

The second recovery pipe 140 of the compression system 50 according to the first example embodiment of the present disclosure may not be directly connected to the refrigerant inflow port 101 and may be connected to the refrigerant pipe 120 connected to the refrigerant inflow port 101. Through this, the oil O may be recovered from the second oil separator 112 to the refrigerant inflow port 101 without changing a structure of the refrigerant inflow port 101 of the existing compressor 100.

In contrast, the second recovery pipe 140 may be directly connected to the refrigerant inflow port 101. In this case, an additional nozzle member may be formed to the refrigerant inflow port 101. All of the refrigerant pipe 120 and the second recovery pipe 140 may be connected to the nozzle member.

Referring to FIG. 2, the compression system 50 may include the second flow amount control valve 141. The second flow amount control valve 141 may be provided on the second recovery pipe 140. The second flow amount control valve 141 may control the recovery amount of the oil O.

The second flow amount control valve 141 may be electrically connected to the oil surface sensor (not illustrated). Specifically, the oil surface sensor (not illustrated) may sense the amount of the amount of the oil O received in the oil chamber (not illustrated), change the amount of the received oil O into the electronic signal, and send the electronic signal to the processor. According to the predetermined reference, the processor may increase a recovery amount of the oil O that is through the second recovery pipe 140 when the amount of the oil O received in the oil chamber (not illustrated) is insufficient and decrease the recovery amount of the oil O through the second recovery pipe 140 when the amount of the oil O received in the oil chamber (not illustrated) exceeds the reference value.

Hereinafter, an operation of the compression system 50 according to the first example embodiment of the present disclosure will be described with reference to FIGS. 2 and 3.

When the compression system 50 operates as a washing process progresses, the refrigerant R may flow into and be compressed in the compressor 100, and then be discharged to the plurality of oil separators 110 along the refrigerant pipe 120. At this point, while passing through a compression stroke in the compressor 100, the refrigerant R is to include the oil O for lubricating the operation of the oil compressor 100.

While the refrigerant R discharged from the compressor 100 sequentially passes the plurality of oil separators 110 along the refrigerant pipe 120, the refrigerant R may be separated from the oil O. For example, when each of the oil separators 111 and 112 has the oil separation efficiency of ninety percent as illustrated in FIGS. 2 and 3, and under an assumption that an amount of the oil O included in the refrigerant R discharged from the compressor 100 is one hundred, ninety of the oil O may be separated while the refrigerant R passes the first oil separator 111, nine of the oil O may be separated while the refrigerant R which has remaining ten of the oil O passes the second oil separator 112, and finally, the refrigerant R discharged from the compression system 50 may have one of the oil O.

As such, since the oil separators 111 and 112 each having the oil separation efficiency of ninety percent may have final oil separation efficiency of ninety-nine and percent when connected in series, greatly high oil separation efficiency may be achieved.

Furthermore, unlike illustrations in FIGS. 2 and 3, since a finally discharged amount of the oil O included in the refrigerant is zero point one when the plurality of oil separators 110 is formed with three oil separators, the entire compression system 50 may be understood as having oil separation efficiency of ninety-nine point nine percent.

Since an amount of the oil O which escapes from the compression system 50 may be decreased when oil separation efficiency of the compression system 50 is increased, an overall consumed amount of the oil O may be reduced. Also, since an amount of the oil which directly touches laundry may be reduced when the compression system 50 according to the first example embodiment of the present disclosure is used in a dry-cleaning system using carbon dioxide, washing performance may be improved.

Referring back to FIG. 2, the oil O which is separated in the plurality of oil separators 110 may be recovered to the compressor 100. Specifically, in the compression system 50 according to the first example embodiment of the present disclosure, the oil O which is separated and collected in the first oil separator 111 may be recovered to the oil recovery port 103 via the first recovery pipe 130, and the oil O which is separated and collected in the second oil separator 112 may be recovered to the refrigerant inflow port 101 via the second recovery pipe 140.

As such, since the oil O may be recovered from all of the first oil separator 111 and the second oil separator 112, the oil O separated in the plurality of oil separators 110 may be effectively recovered to the compressor 100. Through this, the consumed amount of the oil O may be reduced.

At this point, an amount of the oil O separated in the first oil separator 111 is larger than an amount of the oil O separated in the second oil separator 112, and thus, an amount of the oil O recovered via the first recovery pipe 130 may be larger than an amount of the oil O recovered via the second recovery pipe 140. That is, it may be understood that a path in which the oil O is recovered via the first recovery pipe 130 is a main recovery path of the oil O and that a path in which the oil O is recovered via the second recovery pipe 140 is additional.

Since the amount of the oil O recovered from the second oil separator 112 is greatly small, the refrigerant R which is received in the second oil separator 112 may be together recovered via the second recovery pipe 140 when the oil O collected in the second oil separator 112. At this point, since the second recovery pipe 140 is connected to the refrigerant 120 connected to the refrigerant inflow port 101 through which the refrigerant R flow in, the refrigerant R may be prevented from flowing into the oil chamber (not illustrated).

Meanwhile, each time the refrigerant R passes each of the oil separators 111 and 112, a pressure drop may occur because the refrigerant R collides with a partition plate (or a filter) of a partition-plated oil separator.

For example, under an assumption that the refrigerant R discharged from the compressor 100 has a pressure of 40 bars and that a pressure drop of 0.5 bars occurs each time the refrigerant R passes each of the oil separators 111 and 112, a pressure in the first oil separator 111 may be 39.5 bars, and a pressure in the second oil separator 112 may be 39.0 bars.

In the compression system 50 according to the first example embodiment of the present disclosure, the oil O collected in the first oil separator 111 and the oil P collected in the second oil separator 112 may be recovered, with separated paths, to the compressor 100 via the first recovery pipe 130 and the second recovery pipe 140, respectively. In other words, since the compression system 50 is a structure in which the oil O may not flow between the first oil separator 111 and the second oil separator 112, the oil O may be prevented from concentrating on one position due to a pressure difference between the plurality of oil separators 110, and a shortage of the oil O recovered to the compressor 100 may be dissolved.

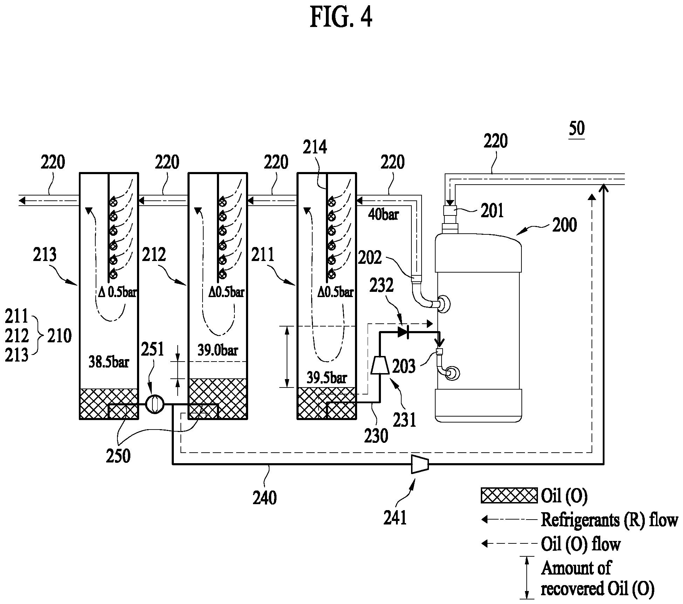

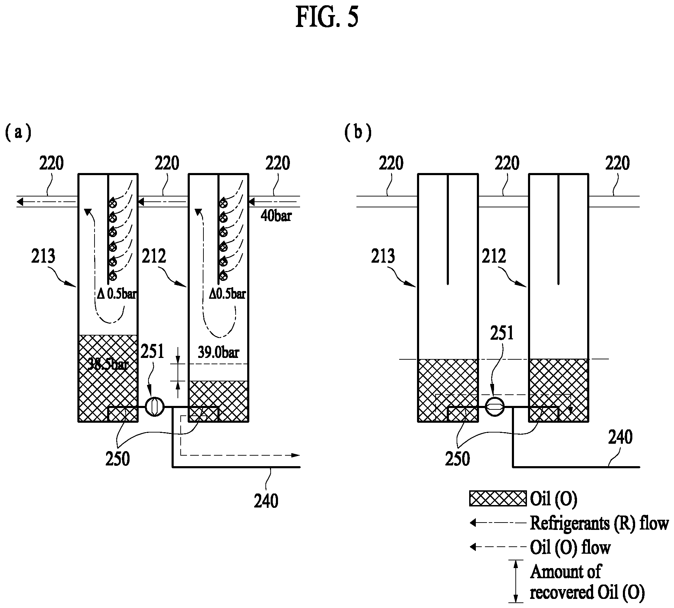

FIG. 4 is a diagram illustrating a compression system according to a second example embodiment of the present disclosure. FIG. 5 is a diagram illustrating an operation of a portion of elements of a compression system according to the second example embodiment of the present disclosure.

A detailed element of the compression system 50 according to the second example embodiment of the present disclosure, which is not described below, may be understood as being identical to that of the compression system 50 according to the first example embodiment of the present disclosure, which is described in association with FIG. 2.

Referring to FIG. 4, a plurality of oil separators 210 may further include a third oil separator 213. The third oil separator 213 may be connected to a second oil separator 212 in series along a travelling path of the refrigerant R. The refrigerant R which passes through the second oil separator 212 may flow into the third oil separator 213 via a refrigerant pipe 220 connecting the second oil separator 212 and the third oil separator 213.

The third oil separator 213 may have oil separation efficiency equal to those of a first oil separator 211 and the second oil separator 212. For example, as illustrated in FIG. 4, each of the plurality of oil separators 210 may have oil separation efficiency of ninety percent. In this case, final oil separation efficiency of the compression system 50 may be ninety-nine point nine percent as described above.

The compression system 50 may include a first connection pipe 250. The oil O may flow between the second oil separator 212 and the third oil separator 213 via the first connection pipe 250.

The compression system 50 may include a second recovery pipe 240. The second recovery pipe 240 may be connected to the first connection pipe 250. The oil O which is collected in the second oil separator 212 may be recovered to a compressor 200 via the second recovery pipe 240 after passing through the first connection pipe 250. Since the second oil separator 212 may not include an additional port for connection to the second recovery pipe 240 because the second recovery pipe 240 is connected to the first connection pipe 250, not directly connected to the second oil separator 212, the second oil separator 212 may be used in a same way as before without changing an existing oil separator structure thereof.

Unlike an illustration in FIG. 4, the second recovery pipe 240 may be directly connected to the second oil separator 212. In this case, the second oil separator 212 may separately include a port connectable to the first connection pipe 250 and a port connectable to the second recovery pipe 240.

Referring to FIGS. 4 and 5, the compression system 50 may include a first shutoff valve 251. The first shutoff valve 251 may be provided on the first connection pipe 250. The first shutoff valve 251 may shut off a flow of the oil O. Specifically, the first shutoff valve 251 may be shut down when the compression system 50 is operating and opened when the compression system 50 stops.

The first shutoff valve 251 may be disposed between the second recovery valve 240 and the third oil separator 213. Through this, the oil O collected in the second oil separator 212 may be recovered to the compressor 200 via the second recovery pipe 240 in a state in which the first shutoff valve 251 is shut down.

However, unlike the illustration in FIG. 4, when the second recovery pipe 240 is directly connected to the second oil separator 212, a position of the first shutoff valve 251 may not be limited.

Referring to FIG. 5, an operation process of the compression system 50 according to the second example embodiment of the present disclosure will be described.

(a) of FIG. 5 illustrates a state in which the compression system 50 is operating, and (b) of FIG. 5 illustrates a state after stopping operation of the compression system 50.

In addition, (a) of FIG. 5 illustrates a state in which the compression system 50 operates several times while the first shutoff valve 251 is shut down.

Referring to (a) of FIG. 5, when the compression system is operating, the first shutoff valve 251 maybe shut down. Through this, a flow of the oil O due to a pressure difference between the second oil separator 212 and the third oil separator 213 may be shut off, and accordingly, a shortage of the oil O recovered from the second oil separator 212 to the compressor 200 via the second recovery pipe 240 may be prevented.

Meanwhile, in one operation of the compression system 50, an amount of the oil O which is collected in the third oil separator 213 may be smaller than an amount of the oil O collected in the second oil separator 212. However, when the compression system 50 operates several times in the state in which the first shutoff valve 251 is shut down, an oil surface of the oil O in the third oil separator 213 may rise higher than an oil surface of the oil O in the second oil separator 212 after some time because the oil O in the third oil separator 213 is continuously accumulated.

Referring to (b) of FIG. 5, the first shutoff valve 251 may be opened when the compression system 50 stops operating. The first shutoff valve 251 may be opened when the oil O in the third oil separator 213 is accumulated by a predetermined amount or more. Specifically, the first shutoff valve 251 may be opened when the surface of the oil O in the second oil separator 212 is lower than the surface of the oil O in the third oil separator 213. Whether the surface of the oil O in the third oil separator 213 is accumulated by the predetermined amount or more may be identified with a predetermined driving time or a predetermined number of driving times of the compressor 200.

When the first shutoff valve 251 is opened after the compression system 50 stops operating, the oil O may flow from the third oil separator 213 to the second oil separator 212, and oil surfaces in the third oil separator 213 and the second oil separator 212 may be equalized. Through this, a shortfall of the oil O in the second oil separator 212 may be replenished, and the oil O collected in the third oil separator 213 may not be lost and consequentially recovered to the compressor 200 via the second oil separator 212. Thus, a consumed amount of the oil O may be reduced.

Unlike an illustration in FIG. 5, the compression system 50 may include a fourth oil separator. The fourth oil separator may be connected to the third oil separator 213 in series along the travelling path of the refrigerant R.

In addition to the first connection pipe 250, the compression system 50 may include an additional connection pipe that may connect the second oil separator 212 and the fourth oil separator. A shutoff valve may be provided to such an additional connection pipe. A process in which the oil O is accumulated in the fourth oil separator as the compression system 50 repeatedly operates, and the oil O in such a fourth oil separator is equalized with the oil O in the second oil separator 212 may be understood as being identical to the above description associated with the third oil separator 213.

As such, although the compression system 50 includes four or more oil separators, an oil separator provided after the third oil separator 213 may be connected to the second oil separator 212 via a connection pipe. Also, the oil O may be recovered from each of the oil separators to the compressor 200 with an oil equalization method identical to the above description.

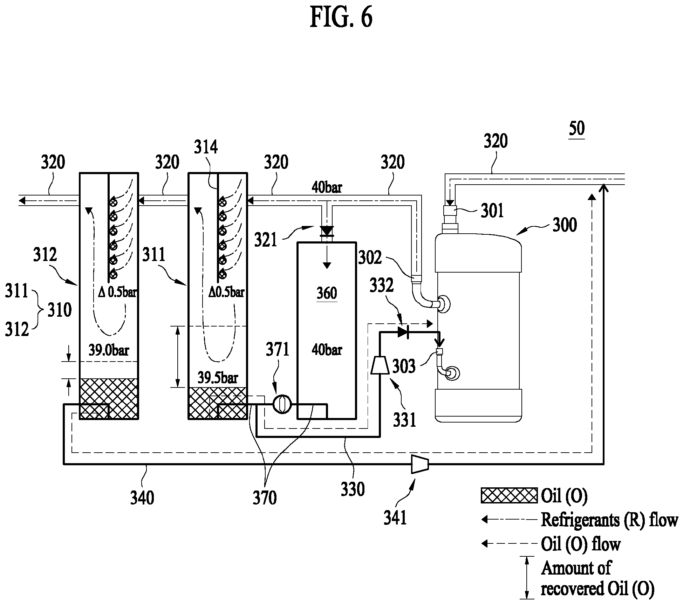

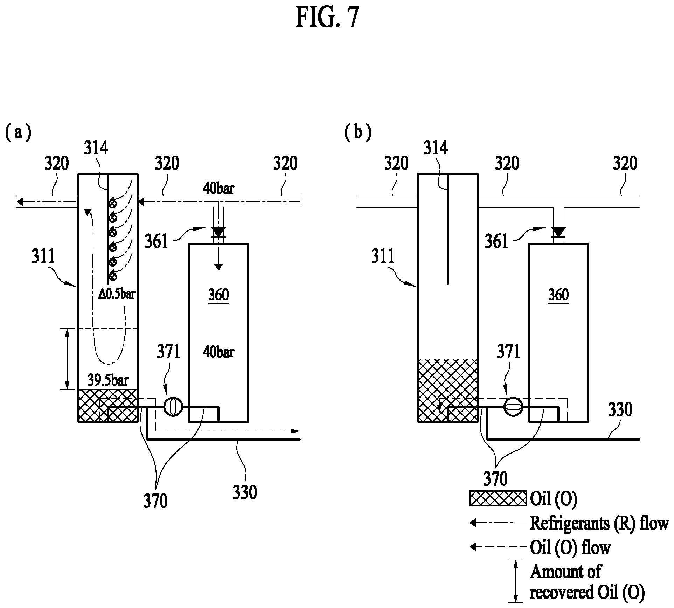

FIG. 6 is a diagram illustrating a compression system according to a third example embodiment of the present disclosure. FIG. 7 is a diagram illustrating an operation of a portion of elements of a compression system according to the third example embodiment of the present disclosure.

A detailed element of the compression system 50 according to the third example embodiment of the present disclosure, which is not described below, may be understood as being identical to that of the compression system 50 according to the first example embodiment of the present disclosure, which is described in association with FIG. 2.

Referring to FIG. 6, the compression system 50 may include an oil reservoir 360. The oil reservoir 360 may be provided by branching from one point on a path in which the refrigerant R which is discharged from a compressor 300 proceeds to a first oil separator 311. The oil reservoir 360 may replenish the compression system 50 with the oil O by an amount insufficient therein.

Specifically, although a plurality of oil separators 310 is present, a small amount of the oil O may escape to be in a refrigerant cycle, and thus, a total amount of the oil O in the compression system 50 may continuously decreased. The oil reservoir 360 may replenish such a shortfall of the oil O.

The compression system 50 may include a refrigerant check valve 321. The refrigerant check valve 321 may be provided to a refrigerant pipe 320 for providing the refrigerant R to the oil reservoir 360. The refrigerant check valve 321 may prevent a backflow of the refrigerant R.

The compression system 50 may include a second connection pipe 370. The oil O may flow between the first oil separator 311 and the oil reservoir 360 via the second connection pipe 370.

The compression system 50 may include a first recovery pipe 330. The first recovery pipe 330 may be connected to the second connection pipe 370. The oil O which is collected in the first oil separator 311 may be recovered to the compressor 300 via the first recovery pipe 330 after passing through the second connection pipe 370. Through this, since the first oil separator 311 may not include a port for connection to the second recovery pipe 340 in addition to a port connected to the second connection pipe 370, the first oil separator 311 may be used in a same way as before without changing an existing oil separator structure thereof.

Unlike an illustration in FIG. 6, the first connection pipe 330 may be directly connected to the first oil separator 311. In this case, the first oil separator 311 may separately include a port connectable to the second connection pipe 370 and a port connectable to the first recovery pipe 330.

Referring to FIG. 6, the compression system 50 may include a second shutoff valve 371. The second shutoff valve 371 may be provided on the second connection pipe 370. The second shutoff valve 371 may shut off a flow of the oil O. Specifically, the second shutoff valve 371 may be shut down when the compression system 50 is operating and opened when the compression system 50 stops.

The second shutoff valve 371 may be disposed between the first recovery pipe 330 and the oil reservoir 360. Through this, the oil O collected in the first oil separator 311 may be recovered to the compressor 300 via the first recovery pipe 300 in a state in which the second shutoff valve 371 is shut down.

However, unlike the illustration in FIG. 6, when the first recovery pipe 330 is directly connected to the first oil separator 311, a position of the second shutoff valve 371 may not be limited.

Referring to FIG. 7, an operation process of the compression system 50 according to the third example embodiment of the present disclosure will be described.

(a) of FIG. 7 illustrates a state in which the compression system 50 is operating. (b) of FIG. 7 illustrates a state after stopping operation of the compression system 50.

Referring to (a) of FIG. 7, the oil reservoir 360 of the compression system 50 according to the third example embodiment of the present disclosure may be provided by branching from one point on the path in which the refrigerant R discharged from the compressor 300 proceeds to the first oil separator 311. Since a refrigerant check valve 361 for preventing the backflow of the refrigerant R may be provided to the refrigerant pipe 320 for providing the refrigerant R to the oil reservoir 360, and since the second shutoff valve 371 is shut down when the compression system 50 is operating, a pressurization state of an inside of the oil reservoir 360 may be always maintained. In other words, a pressure in the oil reservoir 360 may be formed to be greater than or equal to that of the first oil separator 311. Through this, the oil O which is stored in the oil reservoir 360 may be always discharged outward.

When the compression system 50 operates, the oil O collected in the first oil separator 311 may be recovered to the compressor 300 via the first recovery pipe 330. Similarly to the above description, a largest amount of the oil O may be collected in the first oil separator 311. Nevertheless, an oil surface of the oil O in the first oil separator 311 may be lowered because an amount of the oil O recovered from the first oil separator 311 is also largest.

Referring to (b) of FIG. 7, meanwhile, the second shutoff valve 371 may be opened when the compression system stops operating. Specifically, since the amount of the oil O which is recovered from the first oil separator 311 is largest, it may be desired to maintain the oil surface of the oil O in the first oil separator 311 to be at a predetermined level or more before the compression system 50 operates again. When the second shutoff valve 371 is opened, the oil O may flow from the oil reservoir 360 which is maintained to be in the pressurization state to the first oil separator 311 via the second connection pipe 370. Accordingly, the oil surface of the oil O in the first oil separator 311 may rise.

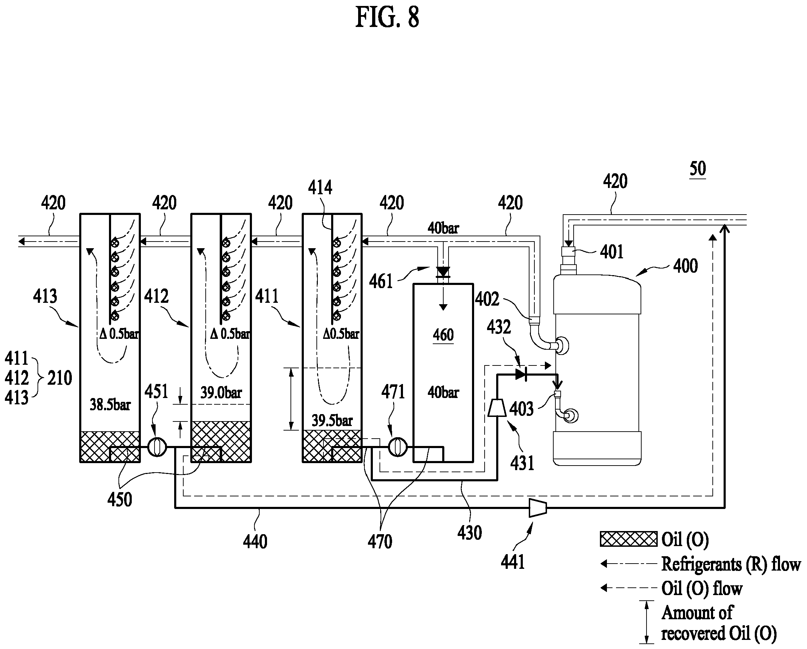

FIG. 8 is a diagram illustrating a compression system according to a fourth example embodiment of the present disclosure.

A detailed element of the compression system 50 according to the fourth example embodiment of the present disclosure, which is not described below, may be understood as being identical to that of the compression system 50 according to the first through third example embodiments of the present disclosure, which is described in association with FIGS. 2 through 7.

Referring to FIG. 8, the compression system 50 may include a compressor 400 and an oil reservoir 460 provided by branching from one point on a path of the refrigerant R which is discharged from the compressor 400 and may include a first oil separator 411, a second oil separator 412, and a third oil separator 413 that are connected in series along a travelling path of the refrigerant.

In the compression system 50 according to the fourth example embodiment of the present disclosure, a detailed element with which and a process in which the oil O is to be recovered from the second oil separator 412 to the compressor 400 via a second recovery pipe 440, and the oil O in the second oil separator 412 and the oil O in the third oil separator 413 are to be equalized through a first connection pipe 450 after the compression system 50 stops operating may be identical to the above description associated with the compression system 50 according to the second example embodiment of the present disclosure.

In addition, in the compression system 50 according to the fourth example embodiment of the present disclosure, a detailed element with which and a process in which the oil O is to be recovered from the first oil separator 411 to the compressor 400 via a first recovery pipe 430, and the oil O is to be supplied from the oil reservoir 460 to the first oil separator 411 via a second connection pipe 470 after the compression system stops operating may be identical to the above description associated with the compression system 50 according to the third example embodiment of the present disclosure.

That is, the compression system 50 according to the fourth example embodiment of the present disclosure may be understood as a combination of the compression system 50 according to the second example embodiment of the present disclosure and the compression system 50 according to the third example embodiment of the present disclosure.

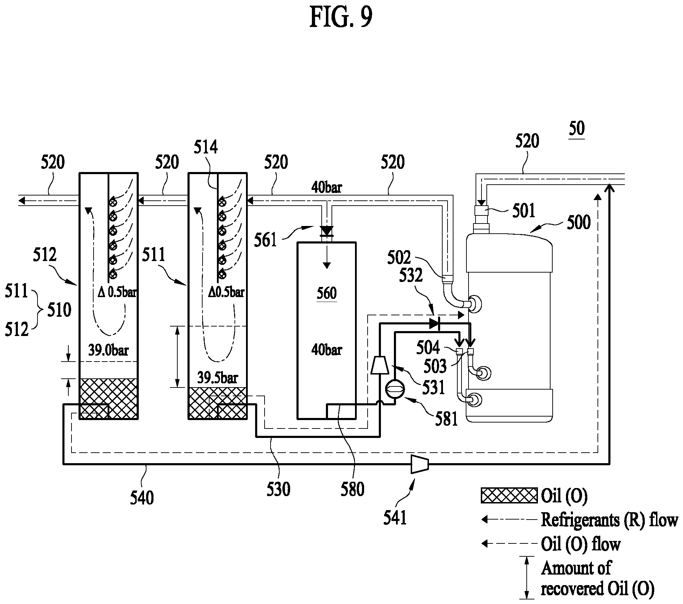

FIG. 9 is a diagram illustrating a compression system according to a fifth example embodiment of the present disclosure.

A detailed element of the compression system 50 according to the fifth example embodiment of the present disclosure, which is not described below, may be understood as being identical to that of the compression system 50 according to the first and second example embodiments of the present disclosure, which is described in association with FIGS. 2 through 5.

Referring to FIG. 9, a compressor 500 may include an oil replenishment port 504. Aside from an oil recovery port 503, the oil replenishment port 504 may be understood as a port for supplying oil to an oil chamber (not illustrated).

The compression system 50 may include a replenishment pipe 580. The replenishment pipe 580 may be connected to the oil replenishment port 504. The replenishment pipe 580 may supply the oil O from an oil reservoir 560 to the oil chamber (not illustrated).

Since the oil reservoir 560 of the compression system 50 according to the fifth example embodiment of the present disclosure directly supplies the oil O to the oil chamber (not illustrated) of the compressor 500, it may be desired that the oil reservoir 560 is disposed near the compressor 500 if possible.

Since a pressurization state of the oil reservoir 560 may be also always maintained similarly to that of the oil reservoir 360 of the compression system 50 according to the third example embodiment of the present disclosure, the oil O may be always discharged outward when a third shutoff valve 581 is opened.

The compression system 50 may include the third shutoff valve 581. The third shutoff valve 581 may be provided on the replenishment pipe 580. The third shutoff valve 581 may shut off a flow of the oil O.

The third shutoff valve 581 may be mechanically or electrically interlocked with an oil surface sensor (not illustrated) provided inside the oil chamber (not illustrated). When the oil O is determined to be insufficient in the oil chamber (not illustrated) by the oil surface sensor (not illustrated), the third shutoff valve 581 is opened, and the oil O which is stored in the oil reservoir 560 may be supplied to the oil chamber (not illustrated).

The oil surface sensor (not illustrated) may be a floating type. In this case, a floor surface of the oil reservoir 560 may be disposed at a position higher than or equal to a height of the oil surface sensor (not illustrated). When the floor surface of the oil reservoir 560 is disposed at a position lower than the oil surface sensor, the oil O may remain on a floor of the oil reservoir 560. Thus, when the floor surface of the oil reservoir 560 is disposed at the position higher than the height of the oil surface sensor (not illustrated), the oil O may be effectively supplied from the oil reservoir 560 to the oil chamber (not illustrated).

Unlike the compression system 50 according to the third example embodiment of the present disclosure, the oil reservoir 560 of the compression system 50 according to the fifth example embodiment of the present disclosure may directly supply the oil O to the oil chamber (not illustrated) of the compressor 500, not to a first oil separator 511. In other words, since the oil reserve 560 may function independently of a plurality of oil separators 510, the oil reservoir 560 may supply the oil O to the compressor 500 as needed and regardless of whether the compressor 500 operates.

### Mode for Carrying Out the Invention

The above-described example embodiments or other example embodiments are not mutually exclusive or distinguished from each other. Elements or functions of the above-described example embodiments or the other example embodiments each may be used in combination or combined with each other.

For example, an element A described in a predetermined example embodiment and/or drawing and an element B described in another example embodiment and/or drawing may be combined. That is, even when combination between the elements is not directly described, the combination is possible unless the elements are described as being not combinable.

The above detailed description is not to be limitedly construed in all aspects and should be considered as an example. The scope of the present disclosure is to be determined by a reasonable interpretation of the accompanying claims, and all changes in a range equivalent to the present disclosure is included in the scope of the present disclosure.

### Industrial Applicability

The above-described features of the present disclosure may be applied partly or wholly to a clothing treatment device business field to which the present disclosure belongs.

## Claims

1. A compression system comprising:
a compressor configured to compress and discharge a refrigerant and comprising a refrigerant inflow port through which the refrigerant flows in and an oil recovery port for recovering oil;
a plurality of oil separator configured to separate the oil which is included in the refrigerant discharged from the compressor and comprising a first oil separator into which the refrigerant discharged from the compressor flows and a second oil separator connected to the first oil separator in series along a travelling path of the refrigerant;
a first recovery pipe configured to recover the oil from the first oil separator to the oil recovery port; and
a second recovery pipe configured to recover the oil from the second oil separator to the refrigerant inflow port.

2. The compression system of claim 1, wherein the second recovery pipe is directly connected to the refrigerant inflow port or connected to a refrigerant pipe connected to the refrigerant inflow port.

3. The compression system of claim 1, further comprising:
a first flow amount control valve provided on the first recovery pipe and configured to control a recovery amount of the oil; and
a second flow amount control valve provided on the second recovery pipe and configured to control the recovery amount of the oil.

4. The compression system of claim 1, further comprising an oil check valve provided on the first recovery pipe and configured to prevent a backflow of the oil.

5. The compression system of claim 1, wherein the plurality of oil separators further comprises a third oil separator connected to the second oil separator in series along the travelling path of the refrigerant, and
the compression system further comprises a first connection pipe in which the oil is to flow between the second oil separator and the third oil separator.

6. The compression system of claim 5, further comprising a first shutoff valve provided on the first connection pipe and configured to shut off a flow of the oil.

7. The compression system of claim 6, wherein the second recovery pipe is connected to the first connection pipe, and
the first shutoff valve is disposed between the second recovery pipe and the third oil separator.

8. The compression system of claim 6, wherein the first shutoff valve is opened when an oil surface of the oil in the third oil separator is higher than an oil surface of the oil in the second oil separator.

9. The compression system of claim 1, further comprising:
an oil reservoir provided by branching from one point on a path of the refrigerant discharged from the compressor toward the first oil separator and configured to store the oil with which the compressor is to be replenished; and
a second connection pipe in which the oil is to flow between the first oil separator and the oil reservoir.

10. The compression system of claim 9, further comprising a second shutoff valve provided on the second connection pipe and configured to shut off a flow of the oil.

11. The compression system of claim 10, wherein the first recovery pipe is connected to the second connection pipe, and
the second shutoff valve is disposed between the second connection pipe and the oil reservoir.

12. The compression system of claim 9, further comprising a refrigerant check valve configured to prevent a backflow of the refrigerant and provided to a refrigerant pipe configured to supply the refrigerant.

13. The compression system of claim 1, further comprising:
an oil reservoir provided by branching from one point on a path of the refrigerant discharged from the compressor toward the first oil separator and configured to store the oil with which the compressor is to be replenished; and
a replenishment pipe configured to replenish an oil chamber with the oil from the oil reservoir.

14. The compression system of claim 13, wherein the compressor further comprises an oil replenishment port configured to replenish the oil chamber with the oil, and
the replenishment pipe is connected to the oil replenishment port.

15. The compression system of claim 13, further comprising a third shutoff valve provided on the replenishment pipe and configured to shut off a flow of the oil.

16. A clothing treatment device comprising:
a washing unit that is supplied with a refrigerant and performs washing of laundry;
a distillation unit comprising a shell forming, inside the shell, a distillation space for receiving the refrigerant which is discharged from the washing unit and comprising a heater positioned inside the shell to heat the refrigerant received in the distillation space;
a compression system for compressing the refrigerant which is distilled in the distillation space and supplying the refrigerant to the heater;
a freezing unit that freezes the refrigerant which is discharged from the heater; and
a storage unit that stores the refrigerant which is liquefied by the freezing unit,
wherein the compression system comprises:
a compressor configured to compress and discharge a refrigerant and comprising a refrigerant inflow port through which the refrigerant flows in and an oil recovery port for recovering oil;
a plurality of oil separator configured to separate the oil which is included in the refrigerant discharged from the compressor and comprising a first oil separator into which the refrigerant discharged from the compressor flows and a second oil separator connected to the first oil separator in series along a travelling path of the refrigerant;
a first recovery pipe configured to recover the oil from the first oil separator to the oil recovery port; and
a second recovery pipe configured to recover the oil from the second oil separator to the refrigerant inflow port.

17. The clothing treatment device of claim 16, further comprising:
a first flow amount control valve provided on the first recovery pipe and configured to control a recovery amount of the oil; and
a second flow amount control valve provided on the second recovery pipe and configured to control the recovery amount of the oil.

18. The clothing treatment device of claim 16, wherein the plurality of oil separators further comprises a third oil separator connected to the second oil separator in series along the travelling path of the refrigerant, and
the compression system further comprises a first connection pipe in which the oil is to flow between the second oil separator and the third oil separator.

19. The clothing treatment device of claim 18, further comprising a first shutoff valve provided on the first connection pipe and configured to shut off a flow of the oil,
wherein the first shutoff valve is opened when an oil surface of the oil in the third oil separator is higher than an oil surface of the oil in the second oil separator.

20. The clothing treatment device of claim 16, further comprising:
an oil reservoir provided by branching from one point on a path of the refrigerant discharged from the compressor toward the first oil separator and configured to store the oil with which the compressor is to be replenished;
a second connection pipe in which the oil is to flow between the first oil separator and the oil reservoir; and
a second shutoff valve provided on the second connection pipe and configured to shut off a flow of the oil.
